# EUROPÄISCHE PATENTSCHRIFT

(11) **EP 1 376 463 B1**
(45) Veröffentlichungstag und Bekanntmachung des Hinweises auf die Patenterteilung: **11.05.2005**
(21) Anmeldenummer: 03013820.0
(22) Anmeldetag: 18.06.2003
(51) Int. Cl.: G06K 19/077, G01S 13/76

(54) **Verfahren zur Anbringung eines Transponders an einem Metallkörper**
Method for mounting a transponder on a metallic object
Procédé pour le montage d'un transpondeur sur un objet métallique

(30) Priorität: 20.06.2002 DE 10227683
(43) Veröffentlichungstag der Anmeldung: 02.01.2004
(73) Patentinhaber: AEG Identifikationssysteme GmbH, 89077 Ulm (DE)
(72) Erfinder: Bloch, Werner, 73054 Eislingen (DE)
(74) Vertreter: Paul, Dieter-Alfred, Dipl.-Ing.

(56) Entgegenhaltungen:
- WO-A-00/70569
- WO-A-02/07081
- DE-A- 19 622 387
- US-A- 5 223 851

## Beschreibung

Die vorliegende Erfindung betrifft ein Verfahren zur Anbringung eines Transponders mit einem Chip und einer Spule an einem Metallkörper, nach dem Oberbegriff von Anspruch 1.

Transponder bestehend aus einem Chip und einer Spule sind hinlänglich bekannt und werden in unterschiedlichen Bereichen eingesetzt, wo ein berührungsloser Datenaustausch zwischen dem Chip des Transponders und einem Lesegerät stattfinden soll. Der Datenaustausch erfolgt hierbei über elektromagnetische Wechselfelder, wozu der Transponder eine entsprechende Antenne in Form einer Spule besitzt. Die Transpondertechnik kommt beispielsweise bei berührungslos arbeitenden Chipkarten zum Einsatz. Neben solchen Anwendungsfeldern in weitgehend ungestörten Umgebungen gibt es auch Einsatzbereiche, in denen die Transponder direkt auf elektrisch leitenden, insbesondere metallischen Flächen zum Einsatz kommen. Dies ist häufig in der Automatisierungstechnik der Fall, wenn Transponder zur Objektidentifikation verwendet werden.

In diesem Zusammenhang wird in der DE 196 22 387 A1 vorgeschlagen, die Spule auf einen flachen Trägerkörper aufzuwickeln und diesen Trägerkörper an der Oberfläche des Metallkörpers über entsprechende Befestigungseinrichtungen in der Weise angzubringen, daß die Achse der Spule etwa parallel zur Oberfläche des Metallkörpers liegt.

Problematisch an diesem Verfahren ist, daß der Transponder im Betrieb empfindlich gegen mechanische und thermische Beanspruchungen, Vibrationen etc. ist.

Aus der EP 1 308 884 A1 ist weiterhin bekannt, einen stabförmig ausgebildeten Transponder in einer als Nut ausgebildeten Kavität in der Oberfläche eines Metallkörpers einzubringen.

Aufgrund der stabförmigen Ausbildung der Transponderspule und deren Anordnung im Bereich des Fensters des Metallkörpers kann ein Magnetfeld, das durch die Sendespule eines entsprechenden RF(radio-frequency)-Lesegerätes erzeugt wird, durch das Fenster hindurch die Transponderspule anregen, so daß der Chip des Transponders ausgelesen und auch beschrieben werden kann. Durch die Einbettung des Transponders in der Kavität ist der Transponder dabei gegen Beschädigungen geschützt.

Die Bestrebungen gehen jedoch dahin, die Anordnung noch sicherer zu gestalten.

Aufgabe der Erfindung ist es daher, ein Verfahren anzugeben, mit dem ein Transponder auf einfache Weise und gut geschützt an einem Metallkörper angebracht werden kann.

Diese Aufgabe wird erfindungsgemäß bei einem Verfahren der eingangs genannten Art durch die kennzeichnenden Merkmale von Anspruch 1 gelöst.

Gemäß der Erfindung ist vorgesehen, daß der Transponder in der Weise in die Kavität eingebracht wird, daß er bis auf den Bereich des Fensters vollständig von Metall umschlossen ist. Hierbei kann es ausreichen, das Fenster des Metallkörpers als einen schmalen Spalt auszubilden, der hinsichtlich der Länge und/oder auch hinsichtlich der Breite kleiner als die Spule sein kann. Auf diese Weise wird erreicht, daß der Transponder sehr gut gegen Beschädigungen geschützt ist. Beispielsweise kann der Transponder in eine als parallel zur Oberfläche des Metallkörpers verlaufende Bohrung eingebracht sein, wobei er dann bis auf die Bohrungsöffnung und die Fensteröffnung vollständig von Metall umschlossen ist.

Um den Schutz des Transponders noch zu erhöhen, ist gemäß einer bevorzugten Ausführungsform der Erfindung vorgesehen, daß das Transponder vor dem Einbringen in die Kavität des Metallkörpers in ein elastisches Material unter Bildung eines Transpondermoduls eingebettet wird. Dieses elastische Material ist in bevorzugter Weise ein weiches Kunststoffmaterial, insbesondere Silicon oder Polyurethan, welches den Transponder gegen thermomechanische Spannungen, Schockeinwirkungen, Vibrationen und mechanische Schläge schützt.

Zusätzlich ist es möglich, das Transpondermodul in eine Hülle aus einem nicht metallischen Material wie beispielsweise Glas oder Kunststoff einzubringen, die einerseits einen zusätzlichen Schutz bietet und andererseits aus dem Transpondermodul auch eine geschlossene Einheit bildet, die leicht in die Kavität des Metallkörpers eingebracht und darin positioniert werden kann.

Insbesondere in dem Fall, daß die Kavität als Bohrung ausbildet ist, kann hierbei die Hülle zweckmäßigerweise in Rohrform ausgebildet sein, wobei der Transponder dann in die Hülle so eingebracht wird, daß die Spulenachse parallel zur Rohrachse verläuft und somit eine definierte Ausrichtung in Bezug auf die Hülle besitzt.

In dem Fall der Verwendung einer solchen Hülle kann der Transponder bestehend aus Chip und Spule zunächst in die Hülle eingebracht und die Hülle dann anschließend mit einem elastischen Material ausgegossen werden. Alternativ ist es möglich, den Transponder zunächst in das elastische Material einzubetten und anschließend mit der Hülle zu versehen. Im übrigen kann die rohrförmige Hülle an ihren axialen Enden jeweils offen oder auch geschlossen ausgebildet sein.

Gemäß einer Weiterbildung der vorliegenden Erfindung ist vorgesehen, daß die Kavität des Metallkörpers nach dem Einbringen des Transponders bzw. des Transpondermoduls mit einem nicht metallischen elastischen Material vergossen wird, wobei als Vergußmaterial zweckmäßigerweise ein Kunststoffmaterial, z.B. ein Epoxidharz, verwendet werden kann. In bevorzugter Weise ist das Vergußmaterial dabei härter als das elastische Material, in welches der Transponder eingebettet bzw. mit welchem die Hülle verfüllt ist, da es dem Transponder im wesentlichen einen Schutz gegen mechanische Beschädigungen geben soll. Das Vergußmaterial kann dabei die Farbe des Metallkörpers besitzen, so daß die Kavität mit dem eingebrachten Transponder nicht ohne weiteres erkennbar ist, was einen zusätzlichen Schutz gegen mutwillige Beschädigungen bietet.

Hinsichtlich weiterer vorteilhafter Ausgestaltungen der Erfindung en wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: in Schnittansicht ein Transpondermodul gemäß der vorliegenden Erfindung, das in eine Bohrung eines Metallkörpers eingebracht ist,
- Figur 2: die Anordnung aus Figur 1 in Draufsicht,
- Figur 3: die Anordnung aus Figur 1 in Seitenansicht und
- Figur 4: die Anordnung in Figur 1 mit zusätzlich einer Sendespule eines RF-Lesegeräts im Betrieb.

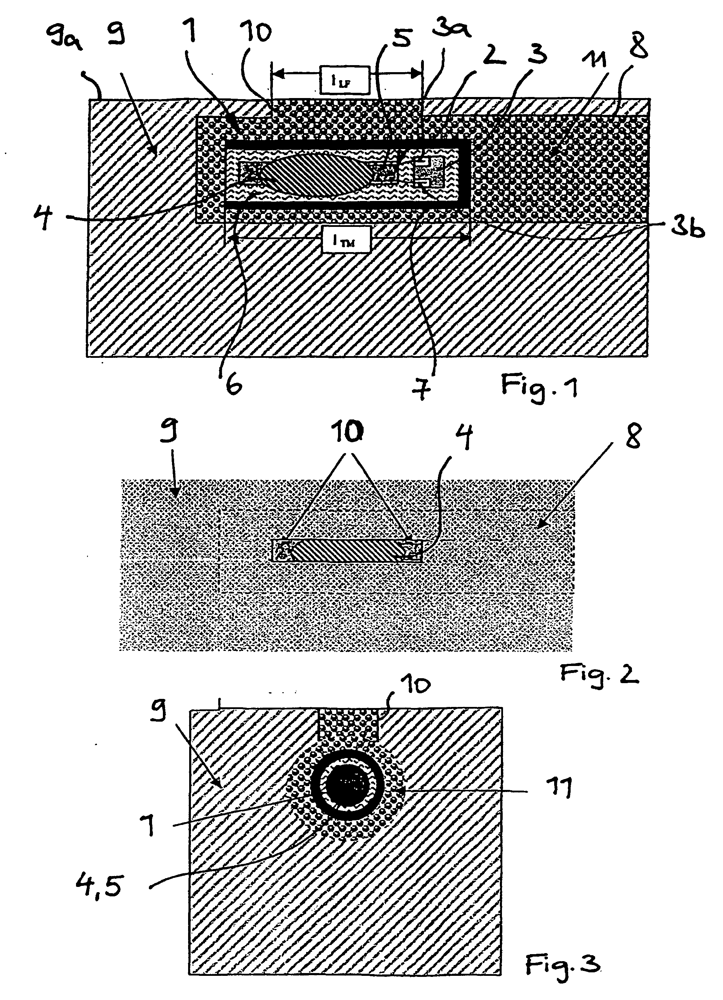

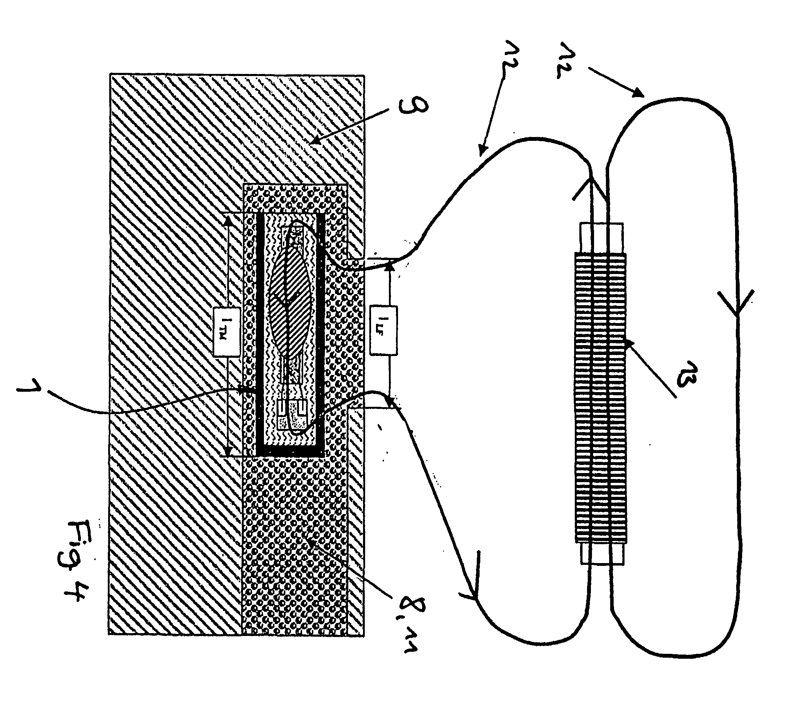

In den Figuren 1 bis 3 ist ein Transpondermodul 1 gemäß der vorliegenden Erfindung dargestellt. Dieses Transpondermodul 1 umfaßt einen Transponder 2 bestehend aus einem Chip 3 und einer Spule 4, die stabförmig auf einen Ferritkern 5 aufgewickelt ist und an ihren Endbereichen mit den elektrischen Anschlüssen 3a, 3b - auch Bondpads genannt - des Chips 3 elektrisch verbunden ist. Der Transponder 2 ist in eine rohrförmige und an ihrem einen axialen Ende verschlossene Hülle 7 aus Glas oder Kunststoff eingebracht, die mit einem elastischen Material 6 wie beispielsweise Silicon oder Polyurethan gefüllt ist. Der Transponder 2 ist in der Hülle 6 dabei so positioniert, daß die Längsachse der Spule 4 bzw. des Ferritkerns 5 parallel zur Längsachse der Hülle 7 liegt.

Das so gebildete Transpondermodul 1 ist in eine Kavität 8 des Metallkörpers 9 eingebracht, die als eine parallel zur Oberfläche 9a des Metallkörpers 9 gelegene Bohrung ausgebildet ist, wobei die Bohrung 8 mit einem spaltförmigen Fenster 10 zu der Oberfläche 9a des Metallkörpers 9 hin öffnet. Das Transpondermodul 1 ist dabei in der Weise in der Bohrung 8 positioniert, daß die Transponderspule 4 im Bereich des Fensters 10 liegt, wie dies insbesondere in der Draufsicht von Figur 2 gut erkennbar ist, und außerdem das Transpondermodul 1 und damit auch die Spule 4 etwa parallel zu der Oberfläche 9a des Metallkörpers 9 ausgerichtet ist.

Die Bohrung 8 des Metallkörpers 9 mit dem darin positionierten Transpondermodul 1 ist mit einem Vergußmaterial 11 verfüllt, das vorzugsweise härter ist als das elastische Material 6, in welches der Transponder 2 eingebettet ist. Beispielsweise kann das Vergußmaterial 11 ein Epoxidharz sein.

Im übrigen lassen die Figuren 1 bis 3 gut erkennen, daß die Länge l_{TM} des Transpondermoduls 1 größer ist als die Länge l_{LF} des Lesefensters 10 und auch eine größere Breite besitzt. Konkret sind die Abmessungen des Lesefensters 10 gerade noch so groß gewählt, daß ein Magnetfeld 12, das durch die Sendespule 13 eines ansonsten nicht weiter dargestellten RF-Lesegeräts in das Fenster 10 eindringen und die Spule 4 anregen kann, so daß der Chip 3 des Transponders 2 ausgelesen und auch beschrieben werden kann, wie dies in Figur 4 angedeutet ist.

In erfindungsgemäßer Weise erfolgt die Einbringung des Transponders 2 in die Bohrung 8 des Metallkörpers 9 in der folgenden Weise:

Zunächst wird in einem ersten Schritt die Spule 4 auf den Ferritkern 5 aufgewickelt und an ihren Enden mit den elektrischen beiden Anschlüssen 3a, 3b des Chips 3 unter Bildung des Transponders 2 elektrisch verbunden.

Anschließend wird der so gebildete Transponder 2 in die Hülle 7 eingebracht und dort so positioniert, daß die Längsachse des Ferritkerns 5 etwa parallel zur Längsachse der Hülle 7 ausgerichtet ist. In dieser Position wird der Transponder 2 fixiert, indem die Hülle 7 mit dem elastischen Material 6 vergossen wird.

Das so gebildete Transpondermodul 1 wird in die Längsbohrung 8 des Metallkörpers 9 eingebracht und so positioniert, daß einerseits die Längsachse der Hülle 7 und damit auch die Längsachse der Spule 4 parallel zu der Oberfläche 9a des Metallkörpers 9 ausgerichtet ist und andererseits die Spule 4 direkt unterhalb des Fensters 10 in dem Metallkörper 9 positioniert ist. Anschließend wird das Transpondermodul 1 in der Bohrung 8 fixiert, indem die Bohrung 8 mit dem Vergußmaterial 11 verfüllt wird.

## Patentansprüche

1. Verfahren zur Anbringung eines Transponders (2) mit einem Chip (3) und einer Spule (4) an einem Metallkörper (9), bei welchem
die Spule (4) stabförmig aufgewickelt und an ihren Enden mit den elektrischen Anschlüssen (3a, 3b) des Chips (3) unter Bildung eines Transponders (2) elektrisch verbunden wird, und
der so gebildete Transponder (2) vollständig in eine Kavität (8) des Metallkörpers (9) in der Weise eingebracht wird, daß die Spulenachse (X) parallel zur Metalloberfläche liegt und die Spule (4) zumindest teilweise im Bereich eines Fensters (10) des Metallkörpers (9) positioniert ist,
wobei der Transponder (2) in der Weise in die Kavität (8) eingebracht wird, daß er bis auf den Bereich des Fensters (10) im wesentlichen vollständig von Metall umschlossen ist,
**dadurch gekennzeichnet, daß** der Transponder (2) in eine als parallel zur Oberfläche des Metallkörpers (9) verlaufende Bohrung (8) als Kavität eingebracht wird und
das Fenster (10), in dessen Bereich die Spule (4) positioniert wird, kleiner ist als der Transponder (2).

2. Verfahren nach Anspruch 1, **dadurch gekennzeichnet, daß** das Fenster (10) eine geringere Länge und/oder geringere Breite als die Spule (4) des Transponders (2) besitzt.

3. Verfahren nach einem der vorherigen Ansprüche, **dadurch gekennzeichnet, daß** der Transponder (2) vor dem Einbringen in die Kavität (8) des Metallkörpers (9) in ein elastisches Material (6) unter Bildung eines Transpondermoduls (1) eingebettet wird.

4. Verfahren nach Anspruch 3, **dadurch gekennzeichnet, daß** als das elastische Material (6) ein weiches Kunststoffmaterial, insbesondere Silicon oder Polyurethan verwendet wird.

5. Verfahren nach Anspruch 3 oder 4, **dadurch gekennzeichnet, daß** der Transponder in eine Hülle (7) aus einem nicht metallischen Material, insbesondere aus Glas oder Kunststoff, eingebracht wird.

6. Verfahren nach Anspruch 5, **dadurch gekennzeichnet, daß** die Hülle (7) nach dem Einbringen des Transponders (2) mit dem elastischen Material (6) verfüllt wird.

7. Verfahren nach Anspruch 5 oder 6, **dadurch gekennzeichnet, daß** Hülle (7) rohrförmig ist und der Transponder (2) in die Hülle (7) so eingebracht wird, daß die Spulenachse parallel zur Rohrachse läuft.

8. Verfahren nach einem der vorherigen Ansprüche, **dadurch gekennzeichnet, daß** die Kavität (8) des Metallkörpers (9) nach dem Einbringen des Transponders (2) mit einem nicht metallischen elastischen Material (11) vergossen wird.

9. Verfahren nach Anspruch 8, **dadurch gekennzeichnet, daß** als Vergußmaterial (11) ein Kunststoffmaterial, insbesondere ein Epoxidharz verwendet wird.

10. Verfahren nach Anspruch 9 und einem der Ansprüche 3 bis 6, **dadurch gekennzeichnet, daß** das Vergußmaterial (11) härter ist als das elastische Material (6), in welches der Transponder (2) eingebettet ist.

11. Verfahren nach einem der vorherigen Ansprüche, **dadurch gekennzeichnet, daß** die Spule (4) auf einen Ferritkern aufgewickelt wird.

## Claims

1. Method for fitting a transponder (2) with a chip (3) and a coil (4) to a metal body (9), wherein
the coil (4) is wound in the form of a bar and is electrically connected at its ends to the electrical connections (3a, 3b) of the chip (3), forming a transponder (2), and
the transponder (2) formed in this way is introduced in its entirety into a cavity (8) in the metal body (9) in such a manner that the coil axis (X) lies parallel to the metal surface, and at least part of the coil (4) is positioned in the region of a window (10) in the metal body (9),
wherein the transponder (2) is introduced into the cavity (8) in such a manner that it is essentially completely surrounded by metal except for the region of the window (10),
**characterized in that** the transponder (2) is introduced into a hole (8), which runs parallel to the surface of the metal body (9), as a cavity and
that the window (10) in whose region the coil (4) is positioned is smaller than the transponder (2).

2. Method according to Claim 1, **characterized in that** the window (10) has a shorter length and/or a narrower width than the coil (4) of the transponder (2).

3. Method according to one of the preceding claims, **characterized in that** the transponder (2) is embedded in an elastic material (6) forming a transponder module (1) before being introduced into the cavity (8) in the metal body (9).

4. Method according to Claim 3, **characterized in that** a soft plastic material, in particular silicone or polyurethane, is used as the elastic material (6).

5. Method according to Claim 3 or 4, **characterized in that** the transponder is introduced into a sleeve (7) composed of a non-metallic material, in particular composed of glass or plastic.

6. Method according to Claim 5, **characterized in that** the sleeve (7) is filled with the elastic material (6) once the transponder (2) has been introduced.

7. Method according to Claim 5 or 6, **characterized in that** the sleeve (7) is tubular and the transponder (2) is introduced into the sleeve (7) such that the coil axis runs parallel to the tube axis.

8. Method according to one of the preceding claims, **characterized in that** the cavity (8) in the metal body (9) is encapsulated with a non-metallic elastic material (11) once the transponder (2) has been introduced.

9. Method according to Claim 8, **characterized in that** a plastic material, in particular an epoxy resin, is used as the encapsulation material (11).

10. Method according to Claim 9 and one of Claims 3 to 6, **characterized in that** the encapsulation material (11) is harder than the elastic material (6) in which the transponder (2) is embedded.

11. Method according to one of the preceding claims, **characterized in that** the coil (4) is wound on a ferrite core.

## Revendications

1. Procédé pour la fixation d'un transpondeur (2) avec une puce (3) et une bobine (4) sur un corps métallique (9), dans lequel
la bobine (4) est embobinée sous forme de barre et se trouve reliée de façon électrique sur ses extrémités avec les connexions électriques (3a, 3b) de la puce (3) en formant un transgondeur (2), et
le transpondeur (2) ainsi formé se trouve complètement introduit dans une cavité (8) du corps métallique (9) de manière à ce que l'axe de la bobine (x) soit parallèle à la surface du métal et que la bobine (4) soit positionnée au moins partiellement dans la zone d'une fenêtre (10) du corps métallique (9),
le transpondeur (2) étant introduit dans la cavité (8) de manière à être presque totalement entouré de métal sauf la zone de la fenêtre (10),
**caractérise en ce que** le transpondeur (2) est introduit dans un alésage (8) en tant que cavité s'étendant de manière parallèle par rapport au corps métallique (9) et
la fenêtre (10) dans la zone de laquelle se trouve positionnée la bobine (4) est plus petite que le transpondeur (2).

2. Procédé selon la revendication 1, **caractérisé en ce que** la fenêtre (10) a une longueur plus courte et/ou une largeur plus courte que la bobine (4) du transpondeur (2).

3. Procédé selon une des revendications précédentes, **caractérisé en ce que** le transpondeur (2) est logé dans un matériau (6) élastique en formant un module transpondeur (1) avant d'être introduit dans la cavité (8) du corps métallique (9).

4. Procédé selon la revendication 3, **caractérisé en ce qu'**on utilise un matériau en matière plastique, notamment en silicone ou en polyuréthane en tant que matériau (6) élastique.

5. Procédé selon la revendication 3 ou 4, **caractérise en ce que** le transpondeur est introduit dans une enveloppe (7) constituée d'un matériau non métallique, notamment en verre ou en matière plastique.

6. Procédé selon la revendication 5, **caractérisé en ce que** l'enveloppe (7) est remplie d'un matériau élastique (6) après l'introduction du transpondeur (2).

7. Procédé selon la revendication 5 ou 6, **caractérisé en ce que** l'enveloppe (7) a une forme de tube et **en ce que** le transpondeur (2) est introduit dans l'enveloppe (7) de manière à ce que l'axe de la bobine s'étende de façon parallèle à l'axe du tube.

8. Procédé selon une des revendications précédentes, **caractérisé en ce que** la cavité (8) du corps métallique (9) est remplie d'un matériau élastique non métallique (11) après l'introduction du transpondeur (2).

9. Procédé selon la revendication 8, **caractérisé en ce qu'**on utilise un matériau en matière plastique, notamment une résine d'époxy en tant que matériau coulé (11).

10. Procédé selon la revendication 9 et une des revendications 3 à 6, **caractérisé en ce que** le matériau coulé (11) est plus dur que le matériau élastique (6) dans lequel le transpondeur (2) est logé.

11. Procédé selon une des revendications précédentes, **caractérisé en ce que** la bobine (4) est embobinée sur un noyau de ferrite.
